# EUROPÄISCHE PATENTSCHRIFT

(11) **EP 4 253 111 B1**
(45) Veröffentlichungstag und Bekanntmachung des Hinweises auf die Patenterteilung: **05.11.2025**
(21) Anmeldenummer: 23151306.0
(22) Anmeldetag: 12.01.2023
(51) Int. Cl.: B60J 10/16, B60J 10/33, B60J 10/75

(54) **AUSSENSCHACHTLEISTE FÜR FAHRZEUGTÜR UND FAHRZEUGTÜR**
BELTLINE SEAL FOR VEHICLE DOOR AND VEHICLE DOOR
JOINT DE CEINTURE DE CAISSE POUR PORTE DE VÉHICULE ET PORTE DE VÉHICULE

(30) Priorität: 23.02.2022 DE 102022201872
(43) Veröffentlichungstag der Anmeldung: 04.10.2023
(73) Patentinhaber: Stellantis Auto SAS, 78300 Poissy (FR)
(72) Erfinder: BAYRAM, Erdal, 65428 Rüsselsheim am Main (DE)
(74) Vertreter: BCIP

(56) Entgegenhaltungen:
- WO-A1-2021/084967
- DE-A1- 102021 213 191
- GB-A- 2 379 239
- JP-A- 2005 119 487
- US-A1- 2021 070 157

## Beschreibung

Die vorliegende Erfindung betrifft eine Schachtleiste zum Führen einer verstellbaren Fensterscheibe, insbesondere an einer Fahrzeugtür, sowie ein Fahrzeugkarosserieteil, insbesondere eine Fahrzeugtür, das mit einer solchen Schachtleiste ausgestattet ist. Die Schachtleiste ist herkömmlicherweise an der Oberkante eines Türkörpers montiert, um einen Schacht zu begrenzen, in dem die Fensterscheibe zwischen einer offenen und einer geschlossenen Stellung beweglich ist, und eine Dichtung zu tragen, die wasserdicht an der Fensterscheibe anliegt. Die Schachtleiste soll relativ zum Türkörper unbeweglich sein, gleichzeitig aber ohne hohen Kraftaufwand schnell und einfach zu montieren sein.

Üblicherweise hat eine solche Schachtleiste einen steifen Leistenkörper mit einer sich in einer Längsrichtung erstreckenden, nach unten offenen Nut zum Aufstecken auf eine Oberkante des Türkörpers. Z. B. zeigt FR 2729449 A eine Schachtleiste, an deren die Nut begrenzenden Schenkeln mehrere sich in der Längsrichtung der Schachtleiste erstreckende Rippen gebildet sind. Wenn die Schachtleiste auf die Oberkante eines Türkörpers aufgesteckt wird, werden die Rippen nach oben und gegen die sie tragenden Schenkel gebogen. Wenn die Dicke der Oberkante nicht so groß ist, dass die Rippen in flach an den Schenkeln anliegender Stellung zwischen den Schenkeln und der Oberkante komprimiert werden, ist die Klemmkraft gering, und ein Auslenken der Schachtleiste quer zur Oberkante ist mit geringem Kraftaufwand möglich. Wenn hingegen die Oberkante dick genug ist, um die Rippen in an den Schenkeln anliegender Stellung zu komprimieren, wird die zum Aufstecken benötigte Kraft sehr hoch, und es ist nur schwer möglich, die Schachtleiste wieder von dem Türkörper zu lösen, ohne dass eines von beiden beschädigt wird.

Aus dem Stand der Technik ist die gattungsbildende US 2021/070157 A1 bekannt.

Eine Aufgabe der vorliegenden Erfindung ist, eine Außenschachtleiste für eine Fahrzeugtür anzugeben, die mit mäßigem Kraftaufwand an der Oberkante des Türkörpers montierbar ist und dennoch fest und spielfreien sitzt.

Die Aufgabe wird einer Ausgestaltung der Erfindung zufolge gelöst, indem bei einer Außenschachtleiste für eine Fahrzeugtür mit einem Leistenkörper, der zwei sich in einer Längsrichtung erstreckende Schenkel und eine sich zwischen den Schenkeln in einer Längsrichtung erstreckende Nut zur Aufnahme einer Oberkante eines Türkörpers aufweist, und wenigstens einer sich entlang des Leistenkörpers erstreckenden Dichtlippe zur Anlage an einer Fensterscheibe der Fahrzeugtür an wenigstens einem ersten der Schenkel in die Nut eingreifende deformierbare Rippen vorgesehen sind und die Rippen in der Längsrichtung voneinander beabstandet und in Tiefenrichtung der Nut langgestreckt sind. Da die Rippen voneinander beabstandet sind, kann die Aufsteckkraft auf ein bequem und ohne Gefahr der Beschädigung der Schachtleiste handhabbares Maß begrenzt werden, außerdem verhindert die Erstreckung in Tiefenrichtung, dass die Rippen beim Aufstecken umgebogen werden und in der Folge dem Abziehen einen wesentlich höheren Widerstand entgegensetzen als dem Aufstecken.

Um ein Umbiegen der Rippen beim Aufstecken der Außenschachtleiste zu vermeiden, sind die Rippen vorzugsweise im Schnitt quer zu ihrer Längsrichtung breiter als hoch.

Um eine ausreichende Verformbarkeit zu gewährleisten, sind die Rippen erfindungsgemäß aus einem nachgiebigeren Material als die Schenkel geformt.

Erfindungsgemäß sind die Rippen an den ersten Schenkel angespritzt sein.

Um das Anspritzen einer Mehrzahl von jeweils voneinander beabstandeten Rippen zu vereinfachen, erstreckt sich erfindungsgemäß ein Element aus dem nachgiebigeren Material entlang des Leistenkörpers und sind die Rippen mit dem Element einteilig verbunden. Das Element kann so während des Anspritzens als Verteiler für das Material der Rippen fungieren.

Die Rippen sind erfindungsgemäß mit dem Element über einen in dem Leistenkörper ausgesparten Durchgang oder Kanal verbunden.

Das Element kann mit einer elastischen Lippe identisch oder einteilig verbunden sein, d.h. Material, das in einen zum Bilden der Lippe vorgesehenen Hohlraum einer Spritzform eingespritzt wird, kann von dort in Hohlräume zum Bilden der Rippen weiterfließen, oder es kann ein gemeinsamer Verteiler vorgesehen sein, über den sowohl der Hohlraum zum Bilden der Lippe als auch die Hohlräume zum Bilden der Rippen mit Material versorgt werden.

Das Element kann sich an einer Außenseite des einen Schenkels erstrecken. Wenn die Außenschachtleiste eine Zierleiste trägt, kann das Element unter der Zierleiste verborgen sein.

Um die Außenschachtleiste an dem Türkörper formschlüssig zu sichern, können an dem zweiten Schenkel der Nut zugewandte Rastaussparungen gebildet sein, um einen Rastvorsprung des Türkörpers aufzunehmen.

Um das Einrücken des Rastvorsprungs in die Rastaussparung zu erleichtern, können die Rippen und die Rastaussparungen in der Längsrichtung alternierend angeordnet sein.

Eine weitere Aufgabe ist, eine Fahrzeugtür mit einer einfach und sicher befestigten Außenschachtleiste zu schaffen.

Die Aufgabe wird einer Ausgestaltung der Erfindung zufolge gelöst durch eine Fahrzeugtür mit einem Türkörper, der eine erste und eine zweite Wandplatte umfasst, wobei eine Oberkante des Türkörpers einen Bördelfalz der ersten Wandplatte und einen von dem Bördelfalz umgriffenen oberen Rand der zweiten Wandplatte umfasst, und der Außenschachtleiste wie oben beschrieben, deren Nut die Oberkante des Türkörpers aufnimmt.

Der oben erwähnte Rastvorsprung ist zweckmäßigerweise Teil der zweiten Wandplatte.

Der Rastvorsprung kann zweckmäßigerweise eine aus der zweiten Wandplatte freigeschnittene, an einem oberen Ende mit der zweiten Wandplatte einteilig zusammenhängende Zunge sein.

Bei der ersten Wandplatte handelt es sich vorzugsweise um eine äußere Wandplatte, bei der zweiten Wandplatte um eine innere Wandplatte des Türkörpers.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen Querschnitt einer an einer Fahrzeugtür montierten Außenschachtleiste,
- Fig. 2: einen Querschnitt der Außenschachtleiste entlang einer Schnittebene; die in Fig. 1 mit II-II bezeichnet ist,
- Fig. 3: einen Schnitt entlang der Ebene III-III aus Fig. 1, und
- Fig. 4: einen zu Fig. 3 analogen Schnitt gemäß einer alternativen Ausgestaltung.

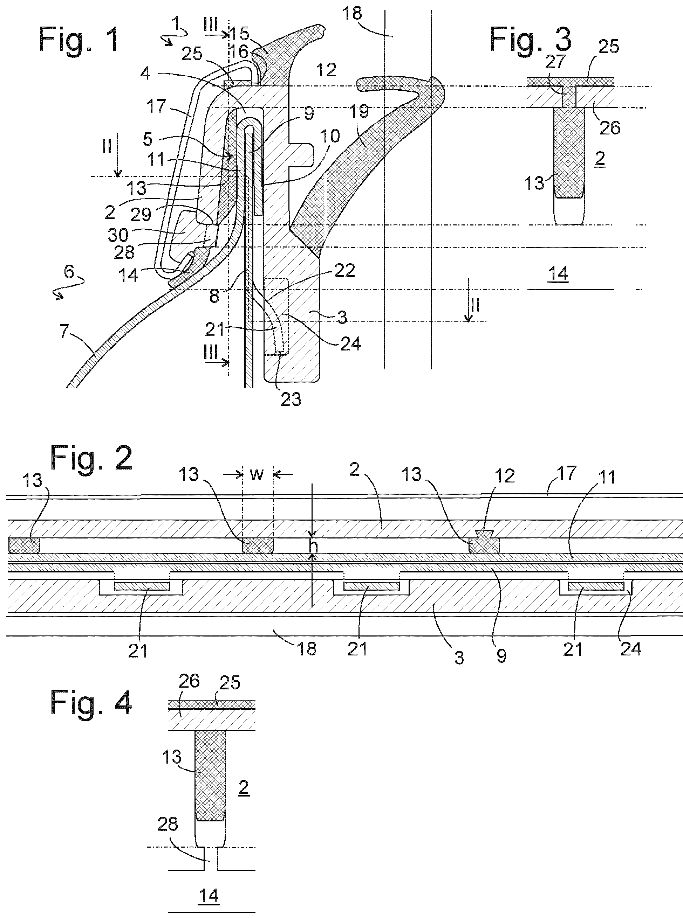

Fig. 1 zeigt einen Querschnitt durch eine Außenschachtleiste 1 an einer Fahrzeugtür. Die Außenschachtleiste 1 hat einen Leistenkörper 26 von im wesentlichen U- oder J- förmigem Querschnitt mit zwei im wesentlichen vertikalen Schenkeln 2, 3, die eine nach unten offene Nut 4 begrenzen. In die Nut 4 greift eine Oberkante 5 eines nur teilweise gezeigten Türkörpers 6 ein. Der Leistenkörper 26 besteht aus einem steifen Kunststoff wie etwa Polypropylen und hat eine solche Wandstärke, dass die Schenkel 2, 3 beim Aufstecken auf die Oberkante 5 nicht merklich auseinandergespreizt werden können.

Der Türkörper 6 umfasst ein hier nicht dargestelltes Türgerippe, an dem fachübliche Einbauten wie etwa eine Türschließung, ein Fensterheber etc. befestigt sind, ein Außenblech 7, das die außen am Fahrzeug sichtbare Seite der Tür bildet und auf das Türgerippe aufgezogen ist, ein Innenblech 8 zur Versteifung eines oberen Randes des Türkörpers sowie eine Innenverkleidung, die das Innenblech 8 zum Fahrzeuginneren hin verdeckt. Innen- und Außenblech 8, 7 sind miteinander verbunden, indem ein oberer Randbereich des Außenblechs 7 um eine Oberkante 9 des Innenblechs 8 herumgebördelt ist, so dass ein distaler Abschnitt 10 des oberen Randbereichs sich an einer Innenseite der Oberkante 9 erstreckt und mit einem Hauptteil des Außenblechs 7 über einen proximalen Abschnitt 11 zusammenhängt, der sich an einer Außenseite der Oberkante 9 erstreckt. Auch wenn die Abschnitte 10, 11 von beiden Seiten her an der Oberkante 9 anliegend verschweißt sind, kann der Krümmungsradius einer Biegezone zwischen den Abschnitten 10, 11 variieren und dazu führen, dass die Dicke der Oberkante 5 geringfügig größer ausfällt als die dreifache Dicke der Bleche 7,8. Damit die Außenschachtleiste 1 sicher auf die Oberkante 5 aufgesteckt werden kann, muss die Breite der Nut 4 größer sein als die maximale Dicke der Oberkante 5. Gleichzeitig muss aber die Schachtleiste 1 spielfrei auf der Oberkante 5 festsitzen, um zu verhindern, dass sie, z.B. durch Medienwiedergabe im Fahrzeug, so zum Schwingen angeregt wird, dass sie an die Oberkante 5 anstößt.

Entlang des Schenkels 2 sind in der Einsteckrichtung der Oberkante 5 langgestreckte Rippen 13 aus einem elastisch nachgiebigen Kunststoffmaterial verteilt, die in die Nut 4 hinein vorspringen. Die Höhe der Rippen 13 ist jeweils so bemessen, dass der Abstand zwischen ihnen und dem gegenüberliegenden Schenkel 3 kleiner ist als die minimale Dicke der Oberkante 5, so dass jede Rippe 13 beim Aufstecken auf die Oberkante 5 flachgedrückt wird und die Oberkante fest gegen den gegenüberliegenden Schenkel 3 angedrückt hält.
und jeweils am proximalen Abschnitt 11 anliegen.

An ein unteres Ende des Schenkels 2 ist eine erste Lippe 14 aus elastisch flexiblem Kunststoff angeformt, die im montierten Zustand der Fig. 1 in Kontakt mit dem Außenblech 7 elastisch verformt ist und die Tiefe begrenzt, bis zu der die Oberkante 5 in die Nut 4 einschiebbar ist. Die Lippe 14 kann aus demselben elastischen Kunststoff geformt sein wie die Rippen 13.

Eine zweite Lippe 15 aus elastischem Material ist an einen Übergangsbereich der Außenschachtleiste 1 angeformt, in dem die Schenkel 2, 3 aufeinandertreffen. Nuten 16 in den Lippen 14, 15 oder dem sie tragenden Leistenkörper 26 ermöglichen das Aufrasten einer Zierleiste 17. Eine Spitze der Lippe 15 ist einer höhenverstellbar in der Tür montierten Fensterscheibe 18 zugewandt, berührt diese aber nicht notwendigerweise.

Eine dritte Lippe 19 ist an einer von der Nut 4 abgewandten Seite des Schenkels 3 angeformt. Die Fig. zeigt den Querschnitt der Lippe 19 in entspannter Konfiguration; durch den Kontakt mit der Fensterscheibe 18 ist die Lippe 19 elastisch ausgelenkt und liegt dichtend an dieser an.

Fig. 2 zeigt einen zweiten Schnitt durch die Außenschachtleiste 1 entlang einer zur Schnittebene der Fig. 1 senkrecht und in Stufen verlaufenden, in Fig. 1 mit II-II bezeichneten Schnittebene. Die Schnittebene kreuzt die Rippen 13; die Höhe h der Rippen 13, d.h. der Abstand zwischen der Oberfläche des Schenkels 2, von der sie vorspringen, bis zu ihrem von dieser Oberfläche abgewandten Scheitel, ist kleiner als ihre Breite w, um sicherzustellen, dass die Rippen 13 dem beim Aufstecken auf sie einwirkenden Druck nicht durch seitwärts Umklappen, sondern durch Flacher- und Breiterwerden nachgeben. Fig. 2 zeigt in ihrem linken Teil zwei Rippen 13 flach auf der Oberfläche des Schenkels 2 aufliegend; um den Halt an dem Schenkel 2 zu verbessern, kann die Rippe auch, wie im rechten Teil der Fig. gezeigt, einen in den Schenkel 2 eingreifenden Verankerungsfortsatz 12 aufweisen.

Der Schenkel 3 an der Türinnenseite erstreckt sich nach unten über den distalen Abschnitt 10 hinaus und ist in einem dem Innenblech gegenüberliegenden unteren Abschnitt mit Aussparungen 24 versehen. Diese Aussparungen 24 sind vorgesehen, um aus dem Innenblech zungenförmig herausgebogene Vorsprünge 21 aufzunehmen und so die Außenschachtleiste 1 formschüssig an der Tür zu sichern. Beim Aufstecken stößt zunächst eine Unterkante des Schenkels 3 gegen einen schrägen Abschnitt 22 jedes Vorsprungs 21 und wird von diesem seitwärts, zum Fahrzeuginnern hin abgelenkt. Indem wie in Fig. 2 gezeigt die Vorsprünge 21 und Aussparungen 24 jeweils in Längsrichtung des Leistenkörpers 26 mit den Rippen alternieren, kann die von den schrägen Abschnitten 22 erzwungene Ablenkung des Schenkels 3 eine Torsion des Leistenkörpers 26 bewirken, so dass eine übermäßige Kompression der Rippen und eine damit einhergehende starke Zunahme des Aufsteckwiderstands vermieden werden kann. Sobald die Aussparungen 24 in Höhe der Vorsprünge 21 angekommen sind, rücken beide wie in Fig.1 und 2 gezeigt ineinander ein und verriegeln so die Außenschachtleiste 1 an der Tür. Indem ein freies Ende 23 des Vorsprungs einer quer zur Aufsteckrichtung verlaufenden Wand der Aussparung 24 gegenüberliegt, ist ein Abziehen der Außenschachtleiste 1 nicht möglich, sofern nicht dabei der Schenkel 3 so weit ins Fahrzeuginnere ausgelenkt wird, dass der Vorsprung 21 aus der Aussparung 24 ausrückt.

Fig. 3 zeigt einen Längsschnitt durch die Außenschachtleiste 1 entlang einer zur Ebene II-II senkrechten, in Fig. 1 mit III-III bezeichneten Ebene. An einem von der Zierleiste 17 überdeckten Bereich an der Außenseite des Leistenkörpers 26 erstreckt sich durchgehend ein Band 25 aus elastischem Material. Im gezeigten Beispiel begrenzt das Band 25 zusammen mit der Lippe 15 die die Zierleiste 17 aufnehmende Nut 16. Ein Durchgang 27 verbindet das Band 25 mit jeder Rippe 13. So ist es möglich, wenn bei der Fertigung der Schachtleiste 1 die elastischen Teile wie Rippen 13 und Lippen 14, 15 an den Leistenkörper 26 angespritzt werden, das Material zur Bildung der Rippen 13 über das Band 25 und die davon abzweigenden Durchgänge 27 zuzuführen.

Fig. 4 zeigt einen Längsschnitt entlang derselben Ebene III-III wie Fig. 3 gemäß einer abgewandelten Ausgestaltung. Hier ist sind die Durchgänge zwischen dem Band 25 und den Rippen 13 weggefallen, stattdessen ist jeder Rippe 13 ein zur Nut 4 hin offener, während des Anspritzens der Rippen 13 von einem Formwerkzeugteil begrenzter Kanal 28 zugeordnet, der die Rippe 13 mit der Lippe 14 verbindet und es so ermöglicht, das zum Bilden der Rippen 13 benötigte Material über denselben Hohlraum des Formwerkzeugs zuzuführen, der auch die Lippe 14 begrenzt.

Einer weiteren Variante zufolge verläuft eine untere Kante 29 des Schenkels 2 im Wesentlichen gleicher Höhe wie die unteren Enden der Rippen 13, und an diese untere Kante 29 schließt ein sich über die gesamte Länge des Leistenkörpers 26 erstreckender Steg 30 an, der aus demselben elastischen Material besteht wie die Rippen 13 und die Lippe 14. Indem der Querschnitt dieses Stegs 30 größer ist als der der Lippe 14, erleichtert er die Verteilung von eingespritztem Material in seiner Längsrichtung, so dass es von dort gleichmäßig verteilt in die Lippe 14 und in die Rippen 13 vorrücken kann und keine durch den lokalen Abfluss von Material zu den Rippen 13 verursachte Ungleichmäßigkeiten der Materialverteilung an der Lippe 14 sichtbar werden.

### Bezugszeichen

- 1: Außenschachtleiste
- 2: äußerer Schenkel
- 3: innerer Schenkel
- 4: Nut
- 5: Oberkante (des Türkörpers)
- 6: Türkörper
- 7: Außenblech
- 8: Innenblech
- 9: Oberkante (des Innenblechs)
- 10: distaler Abschnitt
- 11: proximaler Abschnitt
- 12: Verankerungsfortsatz
- 13: Rippe
- 14: Lippe
- 15: Lippe
- 16: Nut
- 17: Zierleiste
- 18: Fensterscheibe
- 19: Lippe
- 20: Rippe
- 21: Rastvorsprung
- 22: schräger Abschnitt
- 23: freies Ende
- 24: Aussparung
- 25: Band
- 26: Leistenkörper
- 27: Durchgang
- 28: Kanal
- 29: untere Kante
- 30: Steg

## Patentansprüche

1. Außenschachtleiste (1) für eine Fahrzeugtür mit einem Leistenkörper (26), der zwei sich in einer Längsrichtung erstreckende Schenkel (2, 3) und eine sich zwischen den Schenkeln (2, 3) in der Längsrichtung erstreckende Nut (4) zur Aufnahme einer Oberkante (5) eines Türkörpers (6) aufweist, und wenigstens einer sich entlang des Leistenkörpers (26) erstreckenden Dichtlippe (19) zur Anlage an einer Fensterscheibe (18) der Fahrzeugtür, wobei an wenigstens einem ersten der Schenkel (2, 3) in die Nut (4) eingreifende Rippen (13) vorgesehen sind und die Rippen (13) in der Längsrichtung voneinander beabstandet und in Tiefenrichtung der Nut (4) langgestreckt sind, **dadurch gekennzeichnet, dass** deformierbare Rippen (13) vorgesehen sind, die aus einem nachgiebigeren Material als die Schenkel (2, 3) geformt sind, dass die Rippen (13) an den ersten Schenkel (2) angespritzt sind und dass ein Element (14, 25, 30) aus dem nachgiebigeren Material sich entlang des Leistenkörpers (26) erstreckt und die Rippen (13) mit dem Element (14, 25, 30) einteilig verbunden sind und dass die Rippen (13) mit dem Element (14, 25, 30) über einen in dem Leistenkörper (26) ausgesparten Durchgang (27) oder Kanal (28) verbunden sind.

2. Außenschachtleiste nach Anspruch 1, bei der die Rippen (13) im Schnitt quer zu ihrer Längsrichtung breiter sind als hoch.

3. Außenschachtleiste nach Anspruch 1, bei der das Element (14, 25, 30) mit einer elastischen Lippe identisch oder einteilig verbunden ist, welche die Dichtlippe (19) oder eine Lippe (14) zur Anlage an einem Außenblech der Tür ist.

4. Außenschachtleiste nach Anspruch 1 , bei der das Element (14, 25, 30) sich an einer Außenseite des einen Schenkels (2) erstreckt und vorzugsweise unter einer Zierleiste (17) verborgen ist.

5. Außenschachtleiste nach einem der vorhergehenden Ansprüche, bei der an dem zweiten Schenkel (3) der Nut (4) zugewandte Rastaussparungen (24) gebildet sind.

6. Fahrzeugtür mit einem Türkörper (6), der eine erste und eine zweite Wandplatte umfasst, wobei eine Oberkante (5) des Türkörpers einen Bördelfalz der ersten Wandplatte und einen von dem Bördelfalz umgriffenen oberen Rand (9) der zweiten Wandplatte umfasst, und der Außenschachtleiste (1) nach einem der vorhergehenden Ansprüche, deren Nut (4) die Oberkante (5) des Türkörpers (6) aufnimmt.

## Claims

1. An outer door sill strip (1) for a vehicle door, comprising a strip body (26) having two legs (2, 3) extending in a longitudinal direction and a groove (4) extending in the longitudinal direction between the legs (2, 3) for receiving an upper edge (5) of a door body (6), and at least one sealing lip (19) extending along the strip body (26) for engagement with a window pane (18) of the vehicle door, wherein ribs (13) engaging in the groove (4) are provided on at least a first of the legs (2, 3), and the ribs (13) are spaced apart from one another in the longitudinal direction and elongated in the depth direction of the groove (4), **characterized in that** deformable ribs (13) are provided, which are formed from a more flexible material than the legs (2, 3), that the ribs (13) are injection-molded onto the first leg (2), and an element (14, 25, 30) made of the more flexible material extends along the strip body (26), and the ribs (13) are integrally connected to the element (14, 25, 30), and the ribs (13) are connected to the element (14, 25, 30) via a passage (27) or channel (28) recessed in the strip body (26).

2. External shaft strip according to claim 1, wherein the ribs (13) are wider than they are high in section transverse to their longitudinal direction.

3. External shaft strip according to claim 1, wherein the element (14, 25, 30) is identical to or integrally connected to an elastic lip, which is the sealing lip (19) or a lip (14) for engagement with an outer panel of the door.

4. An outer shaft molding according to claim 1, wherein the element (14, 25, 30) extends on an outer side of one leg (2) and is preferably concealed under a decorative strip (17).

5. An outer shaft molding according to one of the preceding claims, wherein locking recesses (24) facing the groove (4) are formed on the second leg (3).

6. A vehicle door comprising a door body (6) comprising a first and a second wall panel, wherein an upper edge (5) of the door body comprises a beaded seam of the first wall panel and an upper edge (9) of the second wall panel encompassed by the beaded seam, and the outer shaft molding (1) according to one of the preceding claims, the groove (4) of which accommodates the upper edge (5) of the door body (6).

## Revendications

1. Bande de seuil de porte extérieure (1) pour portière de véhicule, comprenant un corps de bande (26) présentant deux branches (2, 3) longitudinales et une rainure (4) s'étendant longitudinalement entre les branches (2, 3) pour recevoir le bord supérieur (5) du corps de porte (6), ainsi qu'au moins une lèvre d'étanchéité (19) s'étendant le long du corps de bande (26) pour s'engager avec la vitre (18) de la portière. Des nervures (13) s'engageant dans la rainure (4) sont prévues sur au moins une première branche (2, 3), espacées les unes des autres longitudinalement et allongées dans le sens de la profondeur de la rainure (4). La bande est **caractérisée en ce qu'**elle comprend des nervures déformables (13) formées dans un matériau plus souple que les branches (2, 3), moulées par injection sur la première branche (2), et **en ce qu'**elle comprend un élément (14, 25, 30). La bande (26), fabriquée dans un matériau plus souple, s'étend le long de la bande. Les nervures (13) sont solidaires de l'élément (14, 25, 30) par un passage (27) ou un canal (28) ménagé dans la bande (26).

2. Bande d'arbre extérieure selon la revendication 1, dans laquelle les nervures (13) sont plus larges que hautes en section transversale à leur direction longitudinale.

3. Bande d'arbre extérieure selon la revendication 1, dans laquelle l'élément (14, 25, 30) est identique ou solidaire d'une lèvre élastique, qui est la lèvre d'étanchéité (19) ou une lèvre (14) destinée à coopérer avec un panneau extérieur de la porte.

4. Moulure d'arbre extérieur selon la revendication 1, dans laquelle l'élément (14, 25, 30) s'étend sur le côté extérieur d'un pied (2) et est de préférence dissimulé sous une bande décorative (17).

5. Moulure d'arbre extérieur selon l'une des revendications précédentes, dans laquelle des évidements de verrouillage (24) faisant face à la rainure (4) sont formés sur le second pied (3).

6. Portière de véhicule comprenant un corps de porte (6) comprenant un premier et un second panneau de paroi, un bord supérieur (5) du corps de porte comprenant un joint à bourrelet du premier panneau de paroi et un bord supérieur (9) du second panneau de paroi entouré par le joint à bourrelet, et moulure d'arbre extérieur (1) selon l'une des revendications précédentes, dont la rainure (4) reçoit le bord supérieur (5) du corps de porte (6).
